Europäisches Patentamt

(19) European Patent Office

Office européen des brevets

(11) EP 0 917 091 A2

(12) EUROPEAN PATENT APPLICATION

(43) Date of publication:
19.05.1999 Bulletin 1999/20

(51) Int. Cl.$^6$: G06K 11/18, G06F 3/033

(21) Application number: 98309288.3

(22) Date of filing: 13.11.1998

(84) Designated Contracting States:
AT BE CH CY DE DK ES FI FR GB GR IE IT LI LU
MC NL PT SE
Designated Extension States:
AL LT LV MK RO SI

(30) Priority: 17.11.1997 GB 9724252

(71) Applicant:
Boyadjian, Vigen William
Hong Kong (HK)

(72) Inventor:
Boyadjian, Vigen William
Hong Kong (HK)

(74) Representative:
Atkinson, Ralph et al
Atkinson & Co,
1st Floor, Unit A,
The Technology Park,
Shirland Lane
Sheffield S9 3PA (GB)

(54) Computer input device

(57) An input device e.g. a mouse, for a computer comprises a base unit 1, a planar digitising surface 12 located in the base unit 1, a detachable housing 3 mounted on the base unit 1, an actuating member 4 mounted on the detachable housing 3 and movable in the plane of the digitising surface 12, and a pin 24 located on the actuating member 4 which extends towards the digitising surface 12, the detachable housing 3 being removable by a user to expose the digitising surface 12 for hand use thereof by the user for digitising purposes.

Figure 2

**Description**

This invention relates to computer systems and more especially to input device arrangements for such systems.

Existing input devices used to control, for example, cursor movement on a computer monitor (or any similar function associated with electronic equipment) employ different technologies. Such input devices, for example a trackball, a mouse, digitisers (electromagnetic, electrostatic, acoustic and optical) and joysticks are based on the principle of either relative or absolute co-ordinate data systems. Normally the movements are fed via a serial or parallel link to an external device for further processing.

It is an object of the present invention to provide an improved form of input device for computer systems.

According to the present invention there is provided an input device for a computer comprising a base unit, a planar digitising surface located in said base unit, a detachable housing mounted on said base unit, an actuating member mounted on said detachable housing and movable in the plane of said digitising surface, and pin means located on said actuating member which extends towards said digitising surface, said detachable housing being removable by a user to expose said digitising surface for hand use thereof by the user for digitising purposes.

In a preferred embodiment according to the present invention the input device takes the form of a computer mouse.

In carrying out the invention according to the preferred embodiment, it may be arranged that said actuating member constitutes said mouse and is movable perpendicularly to said digitising surface for causing said pin means to contact said digitising surface.

Advantageously, said actuator means incorporates one or more mouse operating buttons.

Conveniently, a pen may be provided for use on said digitising surface when said detachable housing is removed, and it may be arranged that said pen is slidingly received in said base unit for storage purposes.

An exemplary embodiment of the invention will now be described reference being made to the accompanying drawings, in which:

Fig. 1 is a perspective view of an input device in the form of a computer mouse according to the present invention;
Fig. 2 is an exploded view of the computer mouse of Fig. 1;
Fig. 3 is a cross-sectional view of part of the computer mouse of Fig. 1; and
Fig. 4 is a view of the computer mouse of Fig. 1 with the mouse frame removed to expose the digitising membrane thereof.

The computer mouse shown in the drawings may be placed on a flat surface for operation, or may be held in one hand and operated by the other.

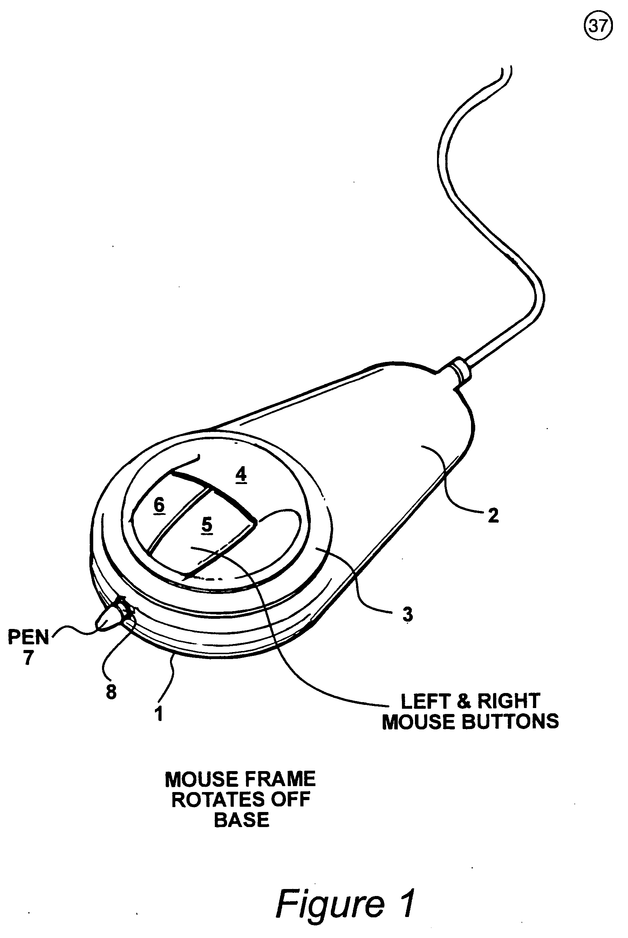

The computer mouse shown in Fig. 1 comprises a base housing 1 which is generally circular with a radial extension 2 in which is contained the mouse electronics (not shown). Detachably mounted on the base housing 1 is a mouse frame 3 on which is slidably mounted an actuator 4 which constitutes the actual movable mouse. The actuator 4 incorporates the usual left and right mouse buttons 5 and 6, respectively.

The base housing 1 provides storage for a digitising pen 7 which is received in a pen holder 8 which locates in a diametrically disposed slot (not shown) in the underside thereof.

The mouse frame 3 is designed to be removable by a user by rotating it relative to the base housing 1 to expose a digitising membrane located within the base housing 1, as will hereinafter be explained, which may then used by the user for normal digitising purposes, either using the pen 7 or by using the user's finger.

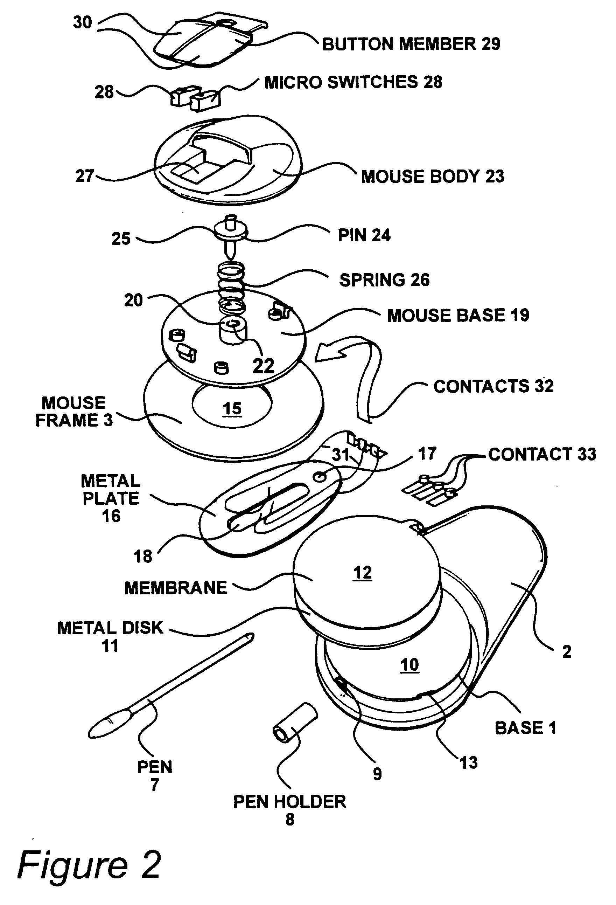

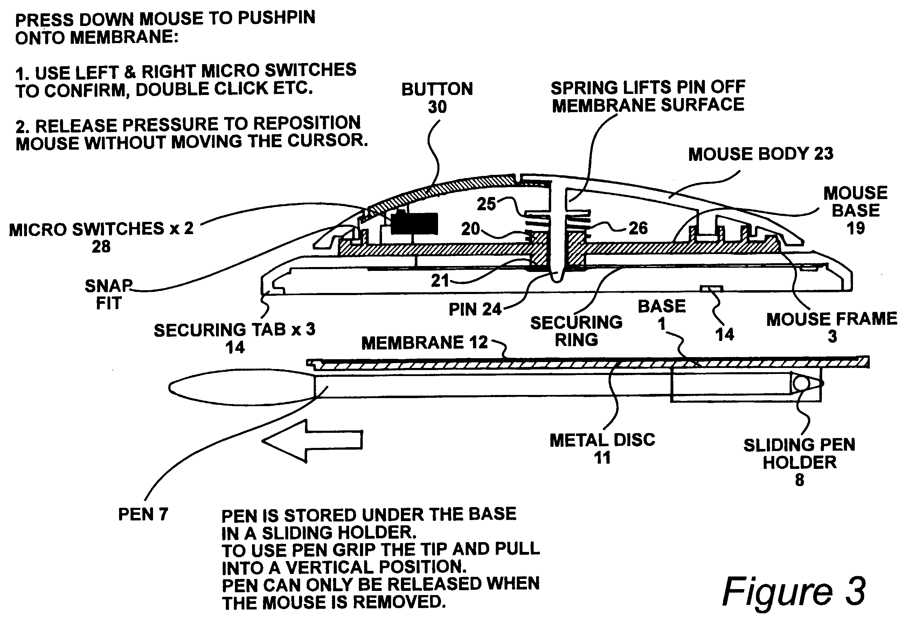

The construction of the computer mouse of Fig. 1 will now be described with reference to the exploded view of Fig. 2 and the cross-sectional view of Fig. 3.

In Fig. 2 the base housing 1 is shown with the radial extension 2 which contains the mouse electronics, and with a slot 9 in which the pen holder 8 locates, and in which the pen 7 is received.

The base housing 1 contains a circular central portion 10 on which is located a metal disc 11 which is used, amongst other things, for earthing purposes, and over which is positioned a multi-layer digitising membrane 12. Electrical connections (not shown) to the digitising membrane 12 are made to the mouse electronics (not shown) contained in the radial extension 2.

The base housing 1 is provided with three radially spaced slots, one of which is shown at 13, which receive respective securing tabs 14 (Fig. 3) located on the underside of the mouse frame 3, which locates over the central portion 10 of the base housing 1 and over the digitising membrane 12.

The mouse frame 3 is provided with a central hole 15, and to its underside is pivotally mounted a generally oval shaped metal securing plate 16. The plate 16 has a hole 17 at one end by means of which it is pivotally mounted to the mouse frame 3 and has a slot 18 which underlies the hole 15 in the mouse frame 3.

The actuator 4 of Fig. 1 which constitutes the movable mouse, comprises a circular mouse base 19 which is provided on its upper surface with a central boss and on its lower surface with a central boss 21, a central hole 22 being provided through the bosses 20 and 21 and through the base 19. The lower boss 21 extends through the hole 15 in the mouse frame 3 and through the slot 18 in the securing plate 16 and is secured to the securing plate 16 by suitable means, e.g. a locking washer (not shown) such that the mouse base 19 is slidably mounted on the securing plate 16. In this way the mouse frame 3 is movable along the slot 18 in the securing plate 16 and from side-to-side due to the pivotal mounting of the securing plate 16.

To the upper surface of the mouse base 19 is secured, e.g. by suitably engaging clips, a mouse body 23 which is provided with a centrally disposed, integrally formed pin 24 which extends downwards through the hole 22 in the mouse base 19. The pin 24 is provided with a radially extending flange 25, and with a spring 26 which extends between the flange 25 and the mouse base 19, and which biasses the mouse body 23 upwards, away from the mouse base 19.

The mouse body 23 is provided with a recess 27, in which is located two micro-switches 28 and which receives a button member 29 which affords buttons 30 which correspond to the mouse buttons 5 and 6 in Fig. 1, and cause respective ones of the micro-switches 28 to be operated when they are pressed.

Electrical connection to the micro-switches 28 is obtained by means of wires 31 which extend from the micro-switches 28 through holes in the bosses 20 and 21 on the mouse base 19 and to contacts 32 which are located on the underside of the mouse frame 3. Corresponding contacts 33 are provided on the base housing 1 which connect to the mouse electronics in the extension 2.

To operate the computer mouse thus far described, the mouse body 23 is pressed downwards against the pressure of the spring 26 to cause the end of the pin 24 to engage the surface of the digitising membrane 12. The mouse body 23 may then be moved laterally to cause the end of the pin 24 to be moved over the surface of the digitising membrane 12. The mouse buttons 30 may be operated in the usual way when the required positioning has been achieved. Alternatively, the mouse body 23 may be raised and lowered instantaneously in order to effect the required switching.

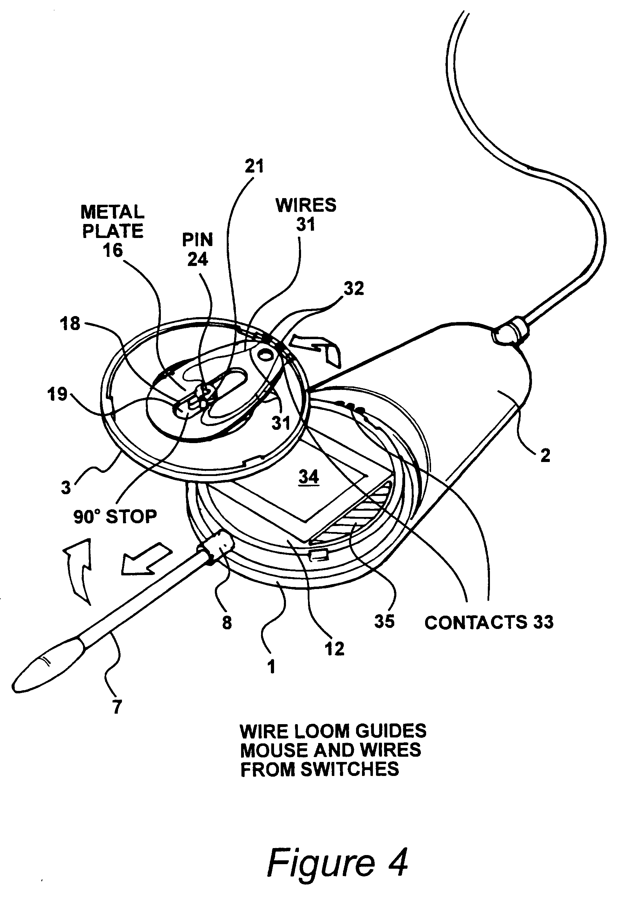

As has already been described, in order to use the computer mouse for manual digitising purposes, the mouse frame 3 may be removed from the base housing 1 to expose the digitising membrane 12 as shown in Fig. 4. In this figure the underside of the mouse frame 3 is shown having the metal securing plate 16 pivotally mounted on it, with the end of the pin 24 extending from the boss 21 located on the underside of the mouse base 19 which can be seen through the slot 18 and in the part of the hole 15 which is showing.

In Fig. 4, the digitising membrane 12 is divided into a square central portion 34 which constitutes the main digitising surface and two outer portions, one of which is shown at 35, which correspond to the usual mouse buttons and can be used accordingly.

As has been explained, the digitising pen 7 may be removed from the pen holder 8 and used directly on the digitising surface 34 or alternatively a user's finger may be used.

Preferably, the digitising membrane 12 takes the form of a resistive platform which is composed of a multi-layer resistive film with protective coating, sandwiched together and linked to control electronics. When an external object applies pressure on the surface of the film, the control electronics (a single IC) processes the information from the resistive platform and calculates the x and y co-ordinates of the point of contact.

The resolution of the computer mouse is measured in dots-per-inch (dpi), and is a function of the physical size of the resistive film. Typical film sizes and corresponding resolutions are as follows:

| Film Size (inches) | Resolution (dpi) |
|---|---|
| 5 x 8 | 128 |
| 3 x 5 | 204 |
| 1.8 x 2.5 | 409 |

The current prototype is based on a 2.5" x 2.5" square on a circular platform and the resolution exceeds the requirements for a "high resolution" (400 dpi) Microsoft type serial mouse. The computer mouse is 100% compatible with the Microsoft serial mouse software, and may be PS/2 compatible and may have 3D capability.

The interface between the resistive layer and the control electronics is achieved via four bi-directional I/O lines $(x_+, x_-, y_+, y_-)$ and buffers to provide the necessary current drive. When pressure is applied to the resistive layer, it forces the x-plane and y-plane to come into contact at the point at which the pressure is applied. To get the x co-ordinate position, the single chip (IC) electronics applies the current drive to the x-plane layer via the $x_+$ and $x_-$ lines, and senses the corresponding voltage in the y-plane via the $y_+$ and $y_-$ lines.

The current drive to the x-plane sets up a voltage gradient ($V_+$ and $V_-$) across the resistive platform. At the point of contact, the voltage gradient is $V_x$, where $V_- \leq V_x \leq V_+$. This voltage is used by the control electronics to calculate the x co-ordinates of the contact point. For the y co-ordinates, current is applied to the y-plane and sensed by the x-plane layer.

The control electronics detects whether the two layers are in contact, if no contact is detected, no co-ordinates will be made available.

To minimise the power consumption of the computer mouse, the control electronics utilise a power save block. When no contact is detected for more than 3 seconds, the electronics automatically enter the power saving mode (2/3 mA). The unit "wakes up" if:

1. A contact is detected.
2. Either button (2 - switches) is activated.
3. The host computer sends an RTS signal to the unit.

Co-ordinate Calculation

The sensed voltages $V_x$ and $V_y$, are first passed to a 10-bit ADC where they are digitised before further processing. The conversation speed of the control electronics permits a data rate of 200 co-ordinates per second (19200bps in serial mode) at a crystal frequency of 1.8432MHz. The IC (the control logic block) calculates the (x, y) co-ordinates of the point of contact and prepares the data for output via the TXD (transmit data) interface. The computer mouse has two different data formats available - MS Mouse or absolute data format (see tables 1 and 2). This action is controlled by a two-position switch on the unit.

Table 1

| Serial Data Format through TXD | |
|---|---|
| **Parameter** | **Description** |
| Data Output Voltage | TTL |
| Serial Output | 1 start bit, 8 data bits, 1 stop bit, NRZ, no parity |
| Normal Frame | Byte 1 = 0xFF |
| | Byte 2 = low byte of X |
| | Byte 3 = high byte of X |
| | Byte 4 = low byte of Y |
| | Byte 5 = high byte of Y |
| Contact & Switches | Byte 1 = 0xFF |
| | Byte 2 = 0xFE |
| | Byte 3 = 0xFE |
| Transmission Rate | 200 frame/sec at 19200bps |

Table 2

| Microsoft Mouse data format | |
| --- | --- |
| **Parameter** | **Description** |
| Data output voltage level | CMOS ($V_{SS}$ to $V_{DD}$) |
| Data format | 7 data bits, no parity |
| Word format | 1 start bit, 7 data bits, 2 stop bits |
| Packed format | 1 **LR $Y_7Y_6X_7X_6$** |
| | 0 **$X_5X_4X_3X_2X_1X_0$** |
| | 0 **$Y_5Y_4Y_3Y_2Y_1Y_0$** |
| Transmission Rate | 1200bps |
| where:<br>"L" is left button status<br>"R" is right button status<br>$Y_7$ and $X_7$ are MSB of Y and X<br>$Y_0$ and $X_0$ are LSB of Y and X<br>X and Y data are in 2's complement | |
| Electrical Specification | |
| Power Supply Voltage | 3.3V |
| Current Active Mode | 5 mA |
| Sleep Mode | 2 mA |
| Serial Baud Rate | |
| 1. MS Mouse Mode | 1200bps |
| 2. Non-mouse Mode | 19200bps |
| Button debounce time | 50 ms |

### Computer Mouse as Absolute Co-ordinate Data Device

After the X and Y position co-ordinates have been established, the information is then formatted to suit a specific application. The following method is used to initialise and calculate for screen data.

Initialisation defines the working limits of the resistive platform. The size of the resistive platform can be larger than the display, or a one-to-one mapping of X and Y data pixel position may be desired. Initialisation is simply done by moving the mouse to the corner extremities, while logging the minimum and maximum values. ($X_{min}$, $Y_{max}$) define the top right-hand corner. Together, these co-ordinate pairs define the working limits of the unit.

Using the raw data from the control electronics with the values for $X_{max}$ $Y_{max}$ $X_{min}$ $Y_{min}$ the screen position of a cursor can be determined according to the following equations:

$$PosX = \frac{X - X_{min}}{delX} \qquad PosY = \frac{Y - Y_{min}}{delY}$$

In the above equations, X and Y are the raw position measurements from the controller, and delX and delY are the number of divisions in the X and Y directions. The following calculations are used to determine delX and delY:

$$delX = \frac{X_{max} - X_{min}}{No.\,of\,divisions\,in\,X} \qquad delY = \frac{Y_{max} - Y_{min}}{No.\,of\,divisions\,in\,Y}$$

The denominators in these two equations ("No. of divisions in X/Y") can be the pixel resolution on a display screen. This would allow for a one-to-one mapping of the resistive platform position to pixel position. If the display were to be zoned into an m x n matrix, then this value would be equal to m and n respectively. If the computer mouse is used in this mode it can behave as a digitiser.

The computer input device which has been described has been given by way of example only and may be modified to suit any particular application. For example, although the device has been described as a separate unit, it could be incorporated integrally with, for example, a computer keyboard. Also, although mouse buttons 5 and 6, and 30 have been shown incorporated in the mouse body 23, they could alternatively or in addition be provided on the radial extension 2 which contains the mouse electronics. Also, although in the computer mouse described, it is arranged that the pin 24 is normally biassed out of contact with the digitising membrane 12, it could be arranged that it is biassed in contact with the membrane, and a button provided to move it out of contact when operated. Although in the computer mouse which has been described the digitising membrane 12 takes the form of a multi-layer resistive film, other digitising membranes based on optical, electro-magnetic, electrostatic or acoustic digitising systems may be used. In addition, it has been found that in some embodiments it is advantageous to provide magnetic tactile feedback which can be achieved by effectively magnetising the metal securing plate 16, which then reacts with the metal disc 11 located in the base housing 1.

## Claims

1. An input device for a computer comprises a base unit, a planar digitising surface located in said base unit, a detachable housing mounted on said base unit, an actuating member mounted on said detachable housing and movable in the plane of said digitising surface, and pin means located on said actuating member which extends towards said digitising surface, said detachable housing being removable by a user to expose said digitising surface for hand use thereof by the user for digitising purposes.

2. A device as claimed in claim 1, in the form of a computer mouse.

3. A device as claimed in claim 2, in which said actuating member constitutes said mouse and is moveable perpendicularly to said digitising surface for causing said pin means to contact said digitising surface.

4. A device as claimed in claim 1 or claim 2, in which said actuator means incorporates one or more mouse operating buttons.

5. A device as claimed in any preceding claim, comprising a pen for use on said digitising surface when said detachable housing is removed.

6. A device as claimed in claim 5, in which said pen is slidingly received in said base unit for storage purposes.

7. An input device substantially as hereinbefore described with reference to the accompanying drawings.

(37)

PEN
7

8

1

4

6

5

2

3

LEFT & RIGHT
MOUSE BUTTONS

MOUSE FRAME
ROTATES OFF
BASE

*Figure 1*

30

BUTTON MEMBER 29

MICRO SWITCHES 28

28

27

MOUSE BODY 23

PIN 24

25

SPRING 26

20

MOUSE BASE 19

22

CONTACTS 32

MOUSE
FRAME 3

15

31

17

CONTACT 33

METAL
PLATE
16

18

12

MEMBRANE

METAL DISK
11

10

2

BASE 1

PEN
7

9

13

PEN HOLDER
8

*Figure 2*

PRESS DOWN MOUSE TO PUSHPIN
ONTO MEMBRANE:

1. USE LEFT & RIGHT MICRO SWITCHES
TO CONFIRM, DOUBLE CLICK ETC.

2. RELEASE PRESSURE TO REPOSITION
MOUSE WITHOUT MOVING THE CURSOR.

BUTTON
30

SPRING LIFTS PIN OFF
MEMBRANE SURFACE

MOUSE BODY 23

MOUSE
BASE
19

MICRO SWITCHES x 2
28

25

20

26

SNAP
FIT

21

PIN 24

SECURING
RING

BASE
1

14

MOUSE FRAME
3

SECURING TAB x 3
14

MEMBRANE 12

METAL DISC
11

SLIDING PEN
HOLDER
8

PEN 7

PEN IS STORED UNDER THE BASE
IN A SLIDING HOLDER.
TO USE PEN GRIP THE TIP AND PULL
INTO A VERTICAL POSITION.
PEN CAN ONLY BE RELEASED WHEN
THE MOUSE IS REMOVED.

*Figure 3*

WIRE LOOM GUIDES
MOUSE AND WIRES
FROM SWITCHES

*Figure 4*